# EUROPEAN PATENT APPLICATION

(11) **EP 1 791 141 A1**
(43) Date of publication of application: **30.05.2007**
(21) Application number: 05782073.0
(22) Date of filing: 07.09.2005
(51) Int. Cl.: H01G 4/12, H01G 4/30

(54) **CERAMIC CAPACITOR AND METHOD FOR MANUFACTURING SAME**

(30) Priority: 27.09.2004 JP 2004279058
(71) Applicant: MATSUSHITA ELECTRIC INDUSTRIAL CO., LTD., Osaka 571-8501 (JP)
(72) Inventor: MORIWAKE, Hiroki c/o Matsushita Electr.Ind.Co. Lt, Osaka-shi, Osaka 540-6319 (JP); HIRATA, Kazuki c/o Matsushita Electr.Ind.Co.Ltd., Osaka-shi, Osaka 540-6319 (JP); NAGAI, Atsuo c/o Matsushita Electr.Ind.Co.Ltd., Osaka-shi Osaka 540-6319 (JP); KOMATSU, Kazuhiro c/o Matsushita Electr.Ind.Co.Lt, Osaka-shi, Osaka 540-6319 (JP)
(74) Representative: Pautex Schneider, Nicole Véronique
(86) International application number: PCT/JP2005/016397
(87) International publication number: WO 2006/035576

(57) **Abstract**

Material powder having a tetragonal perovskite crystal structure essentially containing BaTiO₃ is provided. The material powder has a c-axis/a-axis ratio ranging from 1.009 to 1.011 and an average particle diameter not larger than 0.5µm. A dielectric layer is provided by mixing the material powder with additive. The dielectric layer has a tetragonal perovskite crystal structure essentially containing BaTiO₃. The dielectric layer has a c-axisla-axis ratio ranging from 1.005 to 1.009 and an average particle diameter not larger than 0.5µm. An electrode is formed on the dielectric layer, thus, providing a ceramic capacitor. This ceramic capacitor has a large capacitance and a small capacitance-decreasing rate.

## Description

### TECHNICAL FIELD

The present invention relates to a ceramic capacitor and a method of manufacturing the capacitor.

### BACKGROUND ART

A conventional ceramic capacitor disclosed in Japanese Patent Laid-Open Publication No.2003-243240 includes a thin dielectric layer which has a thickness ranging from 1 to 2µm and a dielectric constant greater than 3500 and electrodes provided on both surfaces of the dielectric layer, thus having a large capacitance.

Having a direct-current (DC) voltage applied between these electrodes, the capacitor has the capacitance significantly decrease. For example, having a DC voltage of 3.15V per 1µm of the thickness of the dielectric layer applied, the capacitor may have the capacitance decrease at a capacitance-decreasing rate more than 50%.

### SUMMARY OF THE INVENTION

Material powder having a tetragonal perovskite crystal structure essentially containing BaTiO₃ is provided. The material powder has a c-axis/a-axis ratio ranging from 1.009 to 1.011 and an average particle diameter not larger than 0.5µm. A dielectric layer is provided by mixing the material powder with additive. The dielectric layer has a tetragonal perovskite crystal structure essentially containing BaTiO₃. The dielectric layer has a c-axis/a-axis ratio ranging from 1.005 to 1.009 and an average particle diameter not larger than 0.5µm. An electrode is formed on the dielectric layer, thus, providing a ceramic capacitor.

This ceramic capacitor has a large capacitance and a small capacitance-decreasing rate.

### BRIEF DESCRIPTION OF THE DRAWINGS

Fig. 1 is a partial cross sectional view of a ceramic capacitor according to an exemplary embodiment of the present invention.
Fig. 2 is a schematic view of the ceramic capacitor according to the embodiment.
Fig. 3 shows a crystal structure of material powder of the ceramic capacitor according to the embodiment.
Fig. 4 shows a c-axis/a-axis ratio of a material powder of the ceramic capacitor according to the embodiment.
Fig. 5 shows a crystal structure of a crystal grain of a dielectric layer of the ceramic capacitor according to the embodiment.
Fig. 6 shows a c-axis/a-axis ratio of the dielectric layer of the ceramic capacitor according to the embodiment.

### REFERENCE NUMERALS

- 1: Dielectric Layer
- 2A: Electrode
- 2B: Electrode
- 3A: External Electrode
- 3B: External Electrode
- 4: Crystal Grain

### DETAILED DESCRIPTION OF THE PREFERRED EMBODIMENT

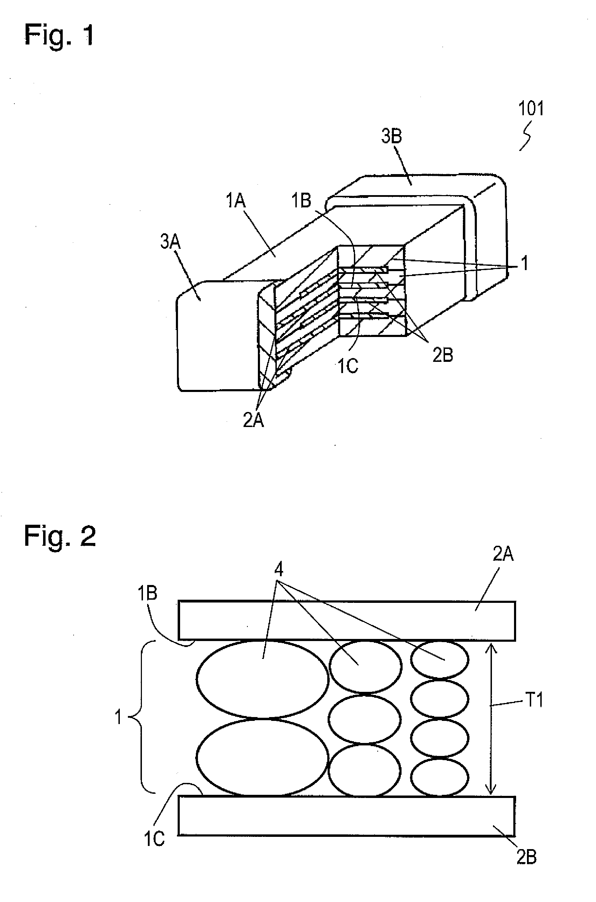

Fig. 1 is a partial cross sectional view of ceramic capacitor 101 according to an exemplary embodiment of the present invention. Ceramic capacitor 101 includes capacitor block 1A and external electrodes 3A and 3B. Capacitor block 1A has dielectric layers 1 and electrodes 2A and 2B alternately stacked among dielectric layers 1 by predetermined distances. That is, dielectric layer 1 has surface 1B and surface 1C opposite to surface 1B. Electrodes 2A and 2B are provided on surfaces 1B and 1C of dielectric layer 1, respectively. Electrodes 2A and 2B extend to both ends of capacitor block 1A and are connected to external electrodes 3A and 3B, respectively.

Fig. 2 is a schematic view of ceramic capacitor 101. Dielectric layer 1 provided between electrodes 2A and 2B has a small thickness (distance T1 between surfaces 1B and 1C) ranging from 1 to 2µm and has a high dielectric constant, accordingly providing ceramic capacitor 101 with a large capacitance. Crystal grain 4 of dielectric layer 1 has a c-axis/a-axis ratio ranging from 1.005 to 1.009, thereby providing dielectric layer 1 with a dielectric constant not smaller than 3500.

A method of manufacturing ceramic capacitor 101 will be described below.

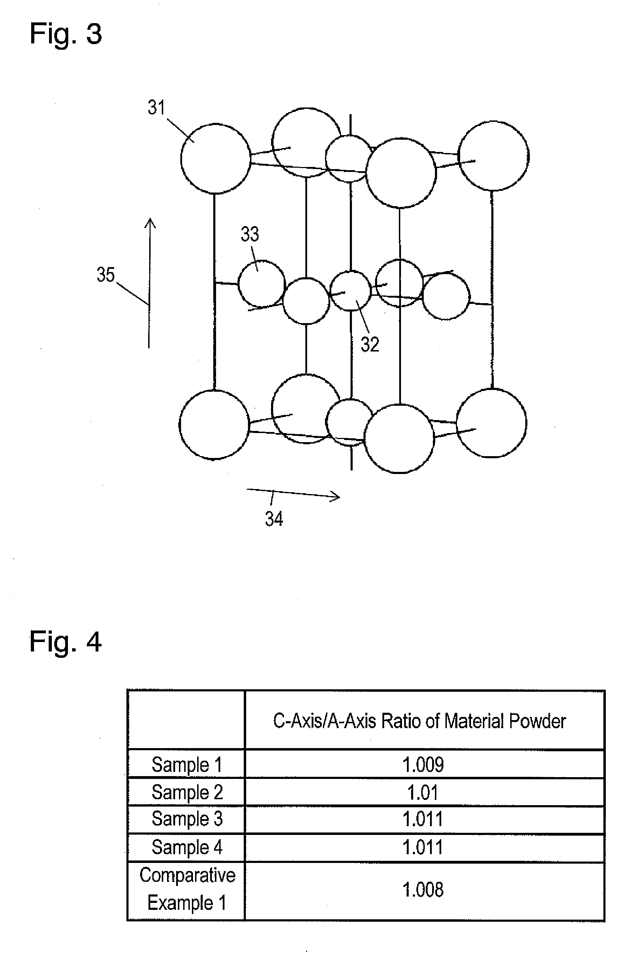

First, material powder essentially containing BaTiO₃ and having a tetragonal perovskite crystal structure is prepared. The material powder has a c-axis/a-axis ratio ranging from 1.009 to 1.011 and an average particle diameter not larger than 0.5µm. First, pre-material powder made of BaTiO₃ and having an average particle diameter ranging from 0.1µm to 0.5µm is prepared by a solid reaction method. Fig. 3 illustrates a crystal structure of the pre-material powder. The pre-material powder have a tetragonal perovskite crystal structure which is composed of Ba atoms 31, Ti atoms 32, and O atoms 33 and which has a-axis 34 and c-axis 35. The c-axis/a-axis ratio of the pre-material powder is measured by an x-ray diffraction-Rietveld analysis method. Samples 1 to 4 of pre-material powder having the c-axis/a-axis ratios ranging from 1.009 to 1.011 are selected based on the measured c-axis/a-axis ratio, thereby providing the material powder. Comparative example 1 of material powder which essentially contains BaTiO₃, which has an average particle diameter ranging from 0.1µm to 0.5µm, and which has a tetragonal perovskite crystal structure by an oxalic acid method used conventionally. Comparative example 1 has the c-axis/a-axis ratio of 1.008 as measured by the x-ray diffraction-Rietveld analysis method.

Next, the material powder is mixed with additive to provide dielectric layer 1 essentially containing BaTiO₃ having a tetragonal perovskite crystal structure. Dielectric layer 1 has a c-axis/a-axis ratio ranging from 1.005 to 1.009 and an average particle diameter not larger than 0.5µm. The pre-material powder of samples 1 to 4 and comparative example 1 shown in Fig. 4 is mixed with MgO as the additive not more than 1mol per 100mol of BaTiO₃. The material power is then dried, calcined, and pulverized, thereby providing pulverized powder. According to this embodiment, MgO not more than 1mol is added to 100mol of BaTO₃. 1mol to 0.5mol of MgO may be preferably added to 100mol of BaTiO₃, and 1mol of MgO is more preferably added to 100ml of BaTiO₃. The pulverized powder is mixed with binder and formed in a sheet shape, thereby providing plural dielectric layers 1. Dielectric layers 1 and electrodes 2A and 2B are stacked, thus providing a laminated body. The laminated body is sintered at a temperature ranging from 1200 to 1300°C. Then, both ends of the laminated body are cut as to expose electrodes 2A and 2B at both ends thereof, thereby providing capacitor block 1A. External electrodes 3A and 3B are provided on both ends having electrodes 2A and 2B exposing, respectively, thereby providing samples of ceramic capacitor 101.

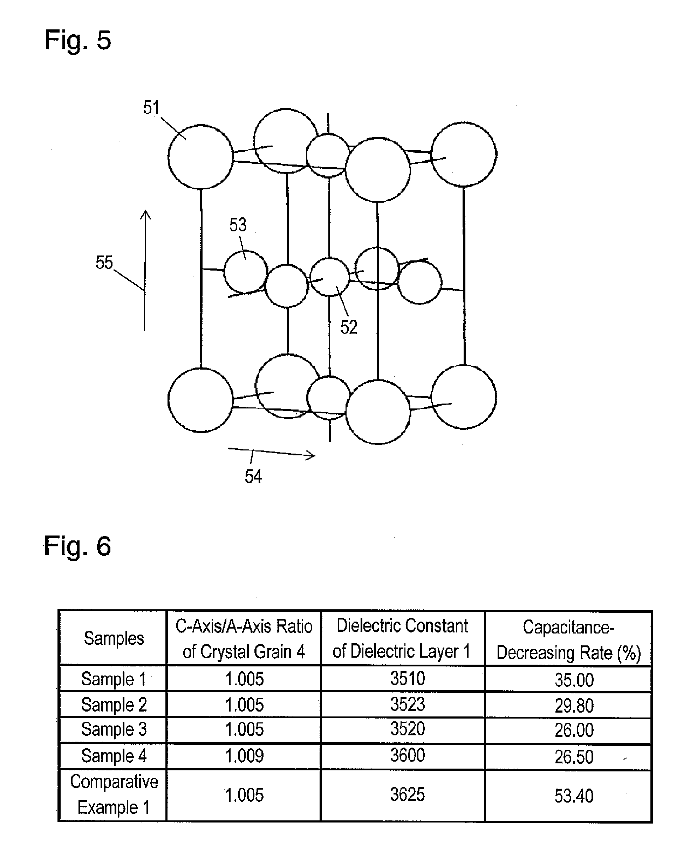

After sintering the laminated body, the interval between electrodes 2A and 2B (thickness T1 of dielectric layer 1) ranges from about 1µm to 2µm, as shown in Fig. 2. This range of thickness T1 of dielectric layer 1 allows two, three, or four crystal grains 4 having average particle diameters not larger than 0.5µm are stacked within the range. Fig. 5 illustrates the crystal structure of crystal grain 4. Crystal grain 4 has a tetragonal perovskite crystal structure containing Ba atom 51, Ti atom 52, and O atom 53 and having a-axis 54 and c-axis 55.

Fig. 6 shows the c-axis/a-axis ratio of dielectric layer 1 of each of the samples of ceramic capacitor 101 obtained from material powder shown in Fig. 4. Dielectric layers 1 obtained from samples 1 to 4 and comparative example 1 have the c-axis/a-axis ratios ranging from 1.005 to 1.009, as shown in Fig. 6.

A direct-current (DC) voltage of 3.15V per 1µm of the thickness of dielectric layer 1 was applied between electrodes 2A and 2B of the samples of ceramic capacitors 101 using material powder of samples 1 to 4 and comparative example 1. Then, a capacitance-decreasing rate of the capacitance of each of the samples after the applying of the DC voltage to the capacitance just after the manufacturing of the samples was measured.

Fig. 6 shows the dielectric constant of dielectric layer 1 and the measured capacitance-decreasing rate of each sample of ceramic capacitor 101 prepared by using material powder of samples 1 to 4 and comparative example 1.

Each sample using material powder of samples 1 to 4 includes dielectric layer 1 having a large dielectric constant not smaller than 3500 and exhibits a capacitance-decreasing rate not higher than 40%. In contrary, the sample using the material powder of comparative example 1 includes dielectric layer 1 having a large dielectric constant of 3625 but exhibits a capacitance-decreasing rate of 53.4%.

While the dielectric constant is determined by the final crystal structure of dielectric layer 1 of completed ceramic capacitor 101, the capacitance-decreasing rate is not determined only by the final crystal structure of dielectric layer 1 and depends also on the crystal structure of the pre-material powder. The material powder having the c-axis/a-axis ratio larger than the c-axis/a-axis ratio of the final crystal structure is added with the additive, thereby having a fine stress of the crystal structure enabled to control and having a small fine defect. This can provide the capacitor with the large dielectric constant more than 3500 and the capacitance-decreasing rate not larger than of 40%.

According to this embodiment, MgO as the additive is mixed to the material powder, but MnO₂, Dy₂O₃, V₂O₅, or Ba-Al-Si-O-base glass as the additive may be mixed to the material powder.

According to this embodiment, the material powder of samples 1 to 4 having the c-axis/a-axis ratios ranging from 1.009 to 1.011 is selected accurately by the x-ray diffraction-Rietveld analysis method from the pre-material powder obtained by the solid reaction method. Alternatively, the material powder having the c-axis/a-axis ratio ranging from 1.009 to 1.011 may be obtained by performing predetermined heat treating for the pre-material powder to a predetermined heat treatment, for example, by heating the pre-material powder up to a temperature ranging from 600 to 1300°C in atmosphere of oxygen having partial pressure not lower than 0.2atms. According to this embodiment, the pre-material powder is heated in the atmosphere of oxygen having partial pressure not lower than 0.2atms. The pre-material powder may be heated in air (oxygen having partial pressure of 0.2atms), preferably in oxygen having high partial pressure ranging from 0.2 to 1atms (an atmospheric pressure). The pre-material powder may be heated in oxygen having partial pressure higher than 1atms depending on the cost of a heat treatment apparatus.

### INDUSTRIAL APPLICABILITY

A ceramic capacitor manufactured by a method according to the present invention has a large capacitance and a small capacitance-decreasing rate, thus being useful for electronic devices having small sizes.

## Claims

1. A method of manufacturing a ceramic capacitor, comprising:
providing material powder having a tetragonal perovskite crystal structure essentially containing BaTiO₃, the material powder having a c-axis/a-axis ratio ranging from 1.009 to 1.011 and an average particle diameter not larger than 0.5µm;
providing a dielectric layer by mixing the material powder with additive, the dielectric layer having a tetragonal perovskite crystal structure essentially containing BaTiO₃, the dielectric layer having a c-axis/a-axis ratio ranging from 1.005 to 1.009 and an average particle diameter not larger than 0.5µm; and
forming an electrode on the dielectric layer.

2. The method according to claim 1, wherein said providing of the material powder comprises:
providing pre-material powder made of BaTiO₃ and having a tetragonal perovskite crystal structure; and
providing the material powder from the pre-material powder.

3. The method according to claim 2, wherein said providing of the pre-material powder comprises providing the pre-material powder by a solid reaction method.

4. The method according to claim 2, wherein said providing of the material powder from the pre-material powder comprises performing predetermined heat treatment for the pre-material powder.

5. The method according to claim 4, wherein said performing of the predetermined heat treatment to the pre-material powder comprises heating the pre-material powder up to a temperature ranging from 600 to 1300°C in atmosphere of oxygen having partial pressure not lower than 0.2atms.

6. The method according to claim 1, wherein said providing of the material powder from the pre-material powder comprises selecting the material powder from the pre-material powder.

7. The method according to claim 6, wherein said selecting of the material powder from the pre-material powder comprises:
measuring a c-axis/a-axis ratio of the pre-material powder by an x-ray diffraction-Rietveld analysis method; and
selecting the material powder from the pre-material powder based on the measured c-axis/a-axis ratio.

8. The method according to claim 1, wherein the additive comprises MgO not more than 1mol per 100mol of BaTiO₃ of the material powder.

9. The method according to claim 1, wherein the dielectric layer has a thickness not larger than 2µm.

10. A ceramic capacitor manufactured by the method according to claim 1.
